# EUROPEAN PATENT SPECIFICATION

(11) **EP 4 579 076 B1**
(45) Date of publication and mention of the grant of the patent: **02.12.2026**
(21) Application number: 23220348.9
(22) Date of filing: 27.12.2023
(51) Int. Cl.: F03D 80/70, F16C 33/66, F16N 7/40, F16N 29/00

(54) **LUBRICATION SYSTEM, BEARING SYSTEM AND METHOD FOR LUBRICATING A BEARING ARRANGEMENT OF A WIND TURBINE**
SCHMIERSYSTEM, LAGERSYSTEM UND VERFAHREN ZUM SCHMIEREN EINER LAGERANORDNUNG EINER WINDENERGIEANLAGE
SYSTÈME DE LUBRIFICATION, SYSTÈME DE PALIER ET PROCÉDÉ DE LUBRIFICATION D'UN AGENCEMENT DE PALIER D'UNE ÉOLIENNE

(43) Date of publication of application: 02.07.2025
(73) Proprietor: Nordex Energy SE & Co. KG, 22419 Hamburg (DE)
(72) Inventor: ALBERTSEN, Björn, 22419 Hamburg (DE); HARICH, Martin, 22419 Hamburg (DE); KOHLRUSCH, Matthias, 22419 Hamburg (DE)
(74) Representative: Epping - Hermann - Fischer

(56) References cited:
- EP-A1- 2 385 248
- CN-A- 115 045 989
- KR-A- 20110 041 858
- US-A1- 2014 007 657
- US-A1- 2014 193 263
- US-A1- 2022 412 322

## Description

The disclosure relates to a lubrication system for a wind turbine. The disclosure further relates to a bearing system for a wind turbine, in particular a bearing system which comprises a lubrication system. The disclosure further relates to a method for lubricating a bearing arrangement of a wind turbine, in particular using a lubrication system as described herein.

A wind turbine may include a rotor that includes a rotatable rotor assembly having multiple rotor blades. The rotor blades transform wind energy into a drive torque that drives the generator of the wind turbine via a drive train.

CN 115 045 989 A relates to a transmission lubricating system that comprises an oil tank and a pump set. The oil tank is used for storing lubricating oil, and the pump set can inject the lubricating oil in the oil tank into a bearing chamber of the spindle bearing and the gearbox through the oil supply pipeline and flow back to the oil tank through the oil return pipeline. An external pressure sensor may be provided to measure the pressure value of the lubricating oil.

It is desirable to provide a lubrication system which provides a reliable operation, such that the kinematic and dynamic elements are aptly lubricated to achieve efficient and optimal power transfer.

It is further desirable to provide a bearing system which provides a reliable operation. It is further desirable to provide a method for lubricating a bearing arrangement which can be carried out reliably.

The invention relates to a lubrication system according to claim 1. The invention further relates to a bearing system according to claim 8. The invention further relates to a method according to claim 11. The invention further relates to a wind turbine according to claim 15.

Embodiments of the disclosure provide a lubrication system for a bearing arrangement of a wind turbine. For example, the bearing arrangement is configured to support a rotor shaft of the wind turbine. The lubrication system comprises a device for extracting at least a portion of a lubricant out of an interior space of the bearing arrangement. The lubrication system is further configured to supply the extracted lubricant to at least one region of the interior space.

The device for extracting, for example, comprises a pump and/or a positive displacement machine or any other arrangement that is configured to extract lubricant out of the interior space and supply it to the at least one region. For example, the device for extracting is configured to convey between 1 and 3 litres per minute.

For example, the device for extracting that can also be referred to as "extracting device", is configured to extract lubricant out of the interior space from one or possibly more regions (or locations) of the interior space, and the extracted lubricant is supplied back to the interior space at one or more regions (or locations). Thus, it is possible to spread the lubricant over different regions of the interior space. The lubricant can be extracted out of the interior space from the region where it accumulates during operation.

One example is lubrication of the bearings of the wind turbine which are provided to support the rotor (main) shaft. Since bearings include dynamic elements such as sliding or rolling elements, rotatable bearing ring, etc., it is crucial that these dynamic elements are appropriately lubricated at contacts or interfaces to minimize friction or wear, and therefore, ensure smooth sliding or rolling movements. Lubrication is also crucial to carry away the heat generated during the process and also to expel some impurities/undesired substances. For example, over the course of operation, a lubricant, for example, grease or oil may be contaminated by undesired contaminants, such as metallic particles, secondary fluids, etc., and such contaminants need to be flushed out to prevent potential complications that may arise during sliding or rolling movements. In addition, other characteristics of a lubricant, e.g., grease, such as viscosity, density, composition, etc., may change which may render the lubricant ineffective.

In an embodiment, at least a portion of the interior space, for example, a lower region of the interior space serves as a passageway for flow of the lubricant to the suction side or extraction side of the device, e.g., a pump. Thus, upon activation or switching ON of the device, the lubricant circulating through the interior space is extracted into the suction side or extraction side of the device.

In an embodiment, where the bearing arrangement is, for example, a rotor (main shaft) bearing of the wind turbine, the interior space may comprise a closed space formed between the bearing (comprising the inner ring, the outer ring and the rolling elements) and the sealing arrangement. This space extends in an axial direction between the bearing and the sealing arrangement, and circumferentially around a portion of the rotor shaft.

Thus, the lubricant that may be pushed into the closed space by virtue of rotation of the rotating ring and the rolling elements may be directly extracted from the closed space into the suction side or the extraction side of the device, e.g., a pump, in a controlled manner.

The extracted lubricant can be supplied back to the interior space at a desired location of the bearing arrangement. For example, the lubricant is extracted at a bottom region of the bearing arrangement, for example in a lower hemispherical region when a horizontal axis bearing arrangement is taken into consideration, The extracted lubricant may be supplied to the interior space at an upper hemispherical part and/or a central part or region of the interior space of this bearing arrangement.

The lubrication system makes it possible to have sufficient lubrication at desired regions of the bearing. The distribution of the lubricant inside the bearing arrangement is improved due to the recirculation of the lubricant between different regions of the bearing arrangement.

The locations at which the lubricant is recirculated into the interior space by the device e.g., a pump may be determined based on optimal lubricant requirements.

In other embodiments, flow characteristics of the lubricant at the time of recirculation into the interior space by the device e.g., a pump may be optimized based on operational characteristics and requirements.

In yet other embodiments, the flow characteristics may be controlled and optimized at the point of entry of recirculated lubricant at one or more regions of the interior space.

According to an embodiment, the lubrication system comprises a filter. The filter is configured to filter the extracted lubricant. For example, the lubrication system comprises one single filter which is arranged after (downstream) the extracting device in a flow direction of the extracted lubricant.

In other embodiments, the filters may be accompanied by or substituted with catcher(s) or separator(s) for removing out contaminants, for example, solid dispersants or particles.

According to further embodiments, the lubrication system comprises a plurality of filters. For example, one of the filters is arranged upstream of the extracting device in a flow direction of the extracted lubricant and a second filter is arranged downstream of the extracting device. The filter is, or the filters are, configured to filter out wear particles and other dirt and thus clean the lubricant. In addition to the recirculation of the lubricant, this allows an improvement of the quality of the lubricant. The condition and/or quality of the lubricant is improvable by the lubrication system.

According to an embodiment, the lubrication system comprises a pressure measurement unit. The pressure measurement unit is configured to determine a pressure of the extracted lubricant. For example, the pressure measurement unit is used to measure the pressure upstream of the filter to monitor the condition of the filter. For example, a degree of contamination of the filter can be detected by monitoring the pressure fluctuations. This way, clogging of the filter can be detected in a timely manner. The pressure measurement can be absolute or differential pressure measurement.

According to an embodiment, the lubrication system comprises a safety device. The safety device is configured to mitigate overpressure in the lubrication system. For example, the safety device is configured to avoid overpressure in the lubrication system. According to embodiments, the safety device comprises a relief valve. According to further embodiments, the safety device comprises a pressure control valve and/or another kind of safety valve, which is configured to open if a certain pressure is reached during operation and to drain lubricant to reduce/relieve the pressure.

According to an embodiment, the lubrication system comprises a conditioning arrangement. The conditioning arrangement is configured to determine a condition of the extracted lubricant. Alternatively, or in addition, the conditioning arrangement is configured to adjust a condition of the extracted lubricant. The condition of the extracted lubricant, for example, is at least one of a temperature, a contamination, for example, distribution of particles, a viscosity, a flow rate, and a composition of the extracted lubricant. Other properties and/or characteristics of the extracted lubricant can also be determined and/or adjusted. For example, a temperature of the extracted lubricant is determined and, if the determined temperature deviates from a pre-set temperature, the temperature of the extracted lubricant is adjusted. Viscosity of the lubricant which is dependent on the temperature could also be adjusted by adjusting the temperature for a desired flow.

According to an embodiment, the conditioning arrangement comprises at least one of a first sensor system and an adjusting unit. The first sensor system is configured to determine the condition of the extracted lubricant. For example, the first sensor system comprises a temperature sensor and/or a particle sensor. The adjusting unit is configured to adjust the condition of the extracted lubricant, for example to change a temperature of the extracted lubricant and/or separate particles.

In an embodiment, the first sensor system and the adjusting unit may operate in tandem relative to each other.

In other embodiment, the first sensor system and the adjusting unit may independently of each other. For example, the adjusting unit may remove contaminants or particles from the lubricant independent of whether the first sensor system detects the presence or distribution of particles or contaminants.

For example, the condition comprises at least one of a particle distribution in the extracted lubricant, a temperature of the extracted lubricant, a flowrate of the extracted lubricant and a secondary fluid content in the extracted lubricant. For example, a magnetic particle catcher is arranged to catch magnetic particles in the extracted lubricant to reduce the amount of magnetic particles before the extracted lubricant is supplied back to the interior space of the bearing. For example, the first sensor system is configured to detect the presence of air and/or humidity in the extracted lubricant. The adjusting unit is configured to remove this air and/or humidity, for example, by heating and/or dehumidification.

According to an embodiment, the lubrication system comprises a second sensor system. The second sensor system is configured to determine an external condition associated with at least one of the lubrication system and the bearing arrangement. For example, the external condition is a temperature in a nacelle of the wind turbine or a speed of the rotor or rotating shaft based on which lubricant extraction and recirculation may be optimized. Other examples include operating characteristics of the extracting device, which include, but not limited to at least one of an electric current associated with operation of the extracting device, like an electric pump, a power calculation of the extracting device, for example, hydraulic power of a hydraulic pump, a temperature of the extracting device, vibrational characteristics, and so on. In other embodiments, other external conditions such as a load on rolling elements of the bearing, a speed of the bearing and/or the shaft, a pressure inside the bearing housing, or other surrounding conditions may be used.

According to an embodiment, the lubrication system comprises a control unit. The control unit is configured to control the device and/or further elements of the lubrication system. For example, the control unit comprises a computer system with a processor, memory and stored executable instructions. For example, the control unit is configured to control at least one of the filter, the pressure measurement unit, the safety device, the conditioning arrangement, and the second sensor system. For example, the control unit is configured to control the extracting device dependent on further elements like the filter, the pressure measurement unit, the safety device, the conditioning arrangement and/or the second sensor system.

According to an embodiment, the lubrication system described herein may be associated with a rotor bearing present on rotor side of the wind turbine and/or the rotor bearing present on the gearbox side of the wind turbine.

Embodiments of the disclosure provide a bearing system for a wind turbine. The bearing system comprises a bearing arrangement. The bearing system comprises a lubrication system according to one of the embodiments described herein. The lubrication system is fluidically coupled with the interior space of the bearing arrangement. The lubrication system is configured to extract at least a part of the lubricant in the interior space directly out of the interior space and supply it back to a pre-set region of the interior space. The bearing arrangement, for example, comprises a main bearing of the wind turbine which rotatably supports the rotor shaft of the wind turbine.

According to an embodiment, the bearing arrangement of the bearing system comprises an enclosure, for example, a bearing housing in case of a rotor bearing, which houses the interior space. The bearing housing further comprises at least one lubricant inlet in the at least one region for supplying the extracted lubricant into the interior space. For example, the lubricant inlet or the plurality of lubricant inlets is/are arranged in an upper region of the bearing housing. Thus, it is possible to supply the extracted lubricant to an upper region of the bearing.

According to an embodiment, the bearing arrangement comprises an opening in a lower region of the interior space. The device for extracting is fluidically connected to the opening for extracting the lubricant out of the interior space. For example, it is possible to extract lubricant from the lower region of the bearing and supply it to an upper region of the bearing. The distribution of the lubricant in the bearing, particularly the contacts or interfaces between moving and stationary elements in the bearing can be improved.

In other embodiments, the opening may be provided at a seal carrier that may axially conceal the interior space (where the lubricant moves as the dynamic elements move) inside the bearing arrangement. The opening, therefore, serves as a fluid passageway through the seal carrier between the interior space and the suction side of the device for extraction, and thereafter, for recirculation.

The disclosure further provides a method for lubricating a bearing arrangement of a wind turbine. In particular, the method uses a lubrication system according to one of the embodiments described herein. According to embodiments, the method is used for lubricating a bearing arrangement according to one of the embodiments described herein.

The method comprises:
- extracting at least a portion of a lubricant out of an interior space of the bearing arrangement, and
- supplying the extracted lubricant to at least one region of the interior space.

Features, advantages, designs and configurations of the lubrication system, the bearing system and the method also apply to the respective systems and to the method.

The method enables an improved lubricant distribution in the bearing arrangement due to the recirculation of the lubricant, in particular back to roller elements of a bearing of the bearing arrangement. The recirculation process is accompanied by conditioning of the lubricant which ensures enhanced quality of lubrication of the dynamic elements. This is beneficial in prolonging the bearing life and improve the efficiency of power transmission.

According to an embodiment, the method encompasses determining value(s) of a pre-set operating condition. Lubricant is extracted out of the interior space if the value of the pre-set operating condition is within a specified range. For example, lubricant is extracted out of the interior space if the pre-set operating condition, for example, a temperature is within a specified temperature range. For instance, the pre-set operating condition can be a temperature, e.g., a pump temperature. When the temperature of the pump is within a specified pump temperature range, the lubricant is extracted out of the interior space by the pump. Once the lubricant is extracted depending on the pre-set operating condition, a condition of the extracted lubricant is continuously monitored. The condition of the lubricant in particular refers to a characteristic of the lubricant including, but not limited to temperature, viscosity, degree of soiling, presence of a secondary fluid, and flow rate.

According to an embodiment, a value of an external condition is determined. The external condition, for example is associated with at least one of the lubrication system and the bearing arrangement.

For example, the external condition is a temperature and/or a pressure inside the bearing arrangement, or other parameters such as loads acting on the moving elements. Lubricant is extracted out of the interior space at specified time intervals, wherein a length of the time intervals depends on the determined value of the external condition. For example, a temperature of the bearing and/or a load condition of the bearing influence(s) the length of the time intervals at which lubricant is extracted out of the interior space and supplied back to the interior space. For example, the lubricant is extracted and supplied back once a day for the duration of one hour. For example, a given quantity of lubricant is conveyed per cycle that corresponds approximately to the total quantity of lubricant in the bearing.

According to an embodiment, the method comprises determining a condition of the extracted lubricant. A warning signal is output and/or an extraction is interrupted if at least one of the following is determined: a value corresponding to the determined condition deviates from a threshold value, and a malfunction associated with the lubrication system of the bearing arrangement. Depending on the type of the condition, the value may exceed or fall below the corresponding threshold value. For example, the malfunction comprises an air inlet into the device, which may result in fluctuation of pressure in the lubrication system.

Further embodiments of the disclosure provide a wind turbine, wherein the wind turbine comprises a nacelle. The wind turbine comprises a lubrication system according to one of the described embodiments or a bearing system according to one of the described embodiments. The lubrication system, or the bearing system, is arranged within the nacelle.

The present invention will be further described with reference to the accompanying drawings. In the drawings, elements of the same structure and/or functionality may be referred to by the same reference signs. It is to be understood that the embodiments shown in the figures are illustrative representations and are not necessarily drawn to scale.
Figure 1 is a schematic view of a wind turbine according to an embodiment.
Figure 2 is a schematic view of a bearing system associated with a lubrication system according to an embodiment.
Figure 3 is a schematic partial sectional view of a bearing arrangement present in the bearing system of FIG. 2, according to an embodiment.
Figure 4 is a schematic view of a flowchart of a method according to an embodiment.

While the invention is amenable to various modifications and alternative forms, specifics thereof have been shown by way of example in the drawings and will be described in detail. It should be understood, however, that the intention is not to limit the invention to the particular embodiment described. On the contrary, the intention is to cover all modifications, equivalents and alternatives falling within the scope of the invention defined by the appended claims.

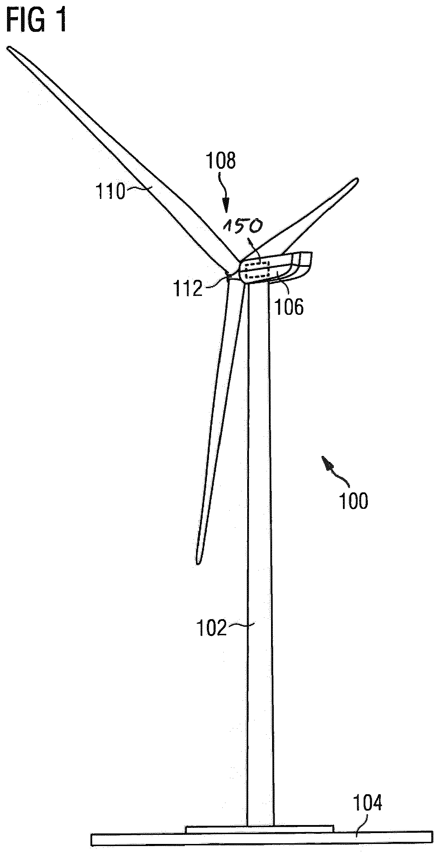

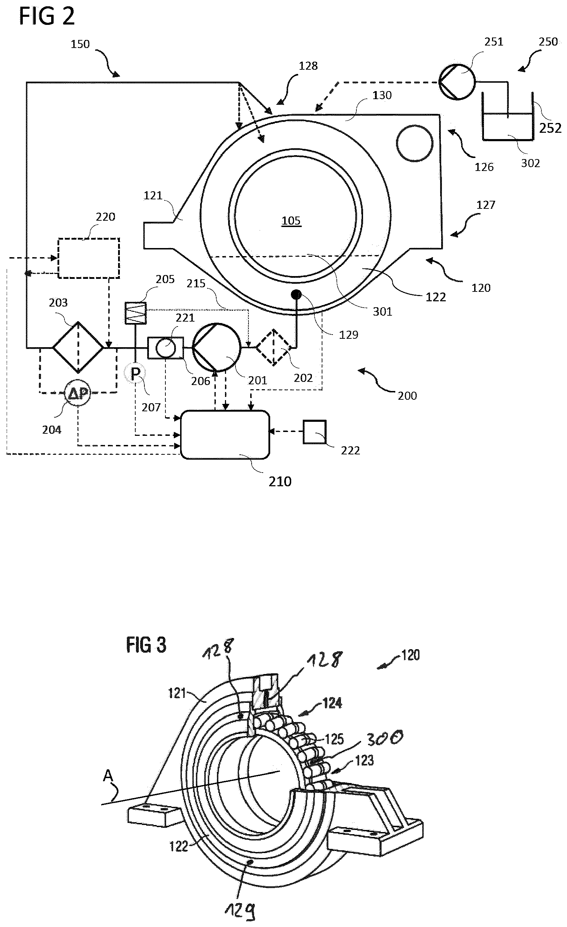

As shown in Figure 1, a wind turbine 100 comprises a tower 102. The tower 102 is connected to a foundation 104 fixed to the ground. Specifically, the foundation 104 is formed at a predetermined depth inside the ground which is reinforced by a composite structure, for example, a concrete support, for sturdiness. A nacelle 106 is arranged on a top end of the tower 102 opposite to the foundation 104. The nacelle 106 houses the drive train, among other components and subassemblies. Inside the nacelle 106, for example, a generator is arranged that is connected to a rotor 108 via the drive train. The drive train comprises, for example, a gearbox (not shown) and a rotor shaft 105 (Figure 2). The rotor 108 comprises several rotor blades 110. The rotor blades 110 are rotatably mounted on a rotor hub 112. The rotor hub 112 is connected to the rotor shaft 105.

The rotor 108 is driven in operation by an airflow, for example wind. The rotational movement of the rotor 108 is transmitted via the drive train to the generator. The generator converts the mechanical output of the rotor 108 into electrical energy.

The wind turbine 100 comprises a bearing system 150. The bearing system 150, for example, comprises at least one of a rotor bearing, a generator bearing, and a bearing inside the gearbox. Although Figure 1 depicts a bearing system 150 in connection with the drive train inside the nacelle 106, it should not be construed as a limitation, as the bearing system 150 may be associated with other movable subassemblies, such as the pitch or blade bearing at the interface of each blade 110 and the hub 112, or a yaw bearing at the interface of nacelle 106 and the tower 102.

Figure 2 shows the bearing system 150 according to an embodiment. The bearing system 150 comprises a bearing arrangement 120. An embodiment of the bearing arrangement 120 in a partial cut-section view is shown in Figure 3. For the purposes of illustration, the bearing arrangement 120 is described as an exemplary rotor bearing arrangement which is used to support the rotor shaft 105 at two (or more) locations along the length of the shaft (105). However, embodiments of the present disclosure may be extended to bearing types or applications, for example, a generator shaft bearing, a gearbox bearing, a slewing bearing of a pitch bearing arrangement or a yaw bearing arrangement.

According to an embodiment, the bearing arrangement 120 described herein may be present on rotor 108 side of the wind turbine 100 and/or the gearbox side of the wind turbine 100.

The bearing system 150 further comprises a lubrication system 200. The bearing system 150 according to Figure 2 further comprises a main lubricant supply 250. According to further embodiments, the main lubricant supply 250 can be omitted.

The bearing arrangement 120, according to an exemplary embodiment of a rotor (main) bearing, comprises a bearing housing 121 that may surround a portion of the rotor shaft 105 along an axial direction 'A'. The bearing housing 121 houses an interior space 123. A bearing 124 is located in the interior space 123. In other words, the bearing 124 may be annularly present between the rotor shaft 105 and the bearing housing 121, as evident from Figure 3 so that the interior space may be formed or defined by around the bearing 124 within the housing 121. The interior space 123 inside the bearing arrangement 120 may refer to void space which may allow movement of the lubricant. In case of other types of bearings, such as a slewing bearing, there may be an enclosure similar to a housing.

The interior space 123 is sealed by a bearing cover 122 on the front side and/or on the rear side of the bearing housing 121 during operation. In an embodiment, a sealing arrangement (not explicitly shown) may be axially disposed between the bearing 124 and the bearing cover 122.

The bearing 124 comprises an inner ring, an outer ring and rolling elements 125 which enable the relative rotation between the inner ring and the outer ring. The inner ring may be connected to the shaft 105 and the outer ring may be connected to the bearing housing 121. This means that the inner ring may be the movable ring component of the bearing, while the outer ring remains stationary with the bearing housing 121. In an alternate embodiment, the inner ring is attached to the bearing housing 121, while the outer ring is attached to the rotor shaft 105, so that the movable and stationary ring configuration may be opposite in comparison to the earlier case. The rolling elements may include, but not limited to cylindrical rolling elements, tapered rolling elements or spherical rolling elements.

Lubricant 300 is provided in the interior space 123 for lubricating the bearing 124, and in particular the rolling elements 125 and the contact surfaces. The lubricant 300 in particular comprises grease and/or oil or consists of grease or oil.

The lubricant 300 is provided in the interior space 123 with a desired lubricant level 301. In some embodiments, an arrangement may be provided inside the housing 121 to regulate quantity of the lubricant inside the housing 121.

The lubricant 300 present inside the interior space may be present in a lower region 127 up to a certain level, for example, up to the lubricant level 301 as depicted in Figure 2 which is readily available for circulation inside the interior space.

The main lubricant supply 250 comprises a supply pump 251 which is configured to pump fresh lubricant 302 out of a tank or a lubricant container 252 into the interior space 123 via a further inlet 130 in the bearing housing 121 or the bearing cover 122. For example, if it is determined that too little lubricant 300 is present in the interior space 123 and/or at specified intervals, the supply pump 251 supplies fresh lubricant 302 to the bearing 124. Main lubricant supply 250 may also supply fresh lubricant 302 into the interior space after the used or contaminated lubricant is drained out of the housing 121 during maintenance.

In addition to the main lubricant supply 250, the lubrication system 200 is provided. The lubrication system 200 is provided to distribute the lubricant 300 that is already in use to lubricate the bearing elements across the bearing 124.

The lubrication system 200 comprises an extracting device 201. The extracting device 201, for example, comprises a pump or another device which is configured to suck or draw a part of the lubricant 300 out of the interior space 123. In the following the extracting device 201 is described using the example of a pump, for example a fixed or a variable speed pump selected either from electrical category or hydraulic category. The description also applies to other types of the extracting device 201.

The pump 201 is fluidically connected to an opening 129. In an embodiment, the opening 129 may be an aperture or a hole which serves as pathway between the interior space and external environment of the bearing arrangement 120. The opening 129, for example, may be provided in the bearing housing 121, in particular, through the bearing cover 122 or the cast part of the housing 121.

In embodiments, the opening 129 may be formed or defined in lower hemispherical region, mid-section, above the mid-section and/or upper hemispherical region of the housing 121.

The extracting device, e.g., the pump 201 is fluidically connected to the opening 129, which in an embodiment is formed in a lower region 127 of the interior space 123.. For example, the opening 129 is arranged in a region of the lowest point of the bearing 124. In other embodiments, there could be more than one openings at different locations, for example, one at the lower region 127 and one at the mid-section or above the mid-section to extract the lubricant out. The number and location of the openings may be dependent on amount of lubricant present in the housing 121, overall capacity of the housing 121 and operational characteristics of the bearing arrangement 120.

In an embodiment, the pump 201 is arranged to extract lubricant 300 out of the of the interior space 123, for example, from the lower region 127, where the lubricant 300 tends to accumulate during operation of the bearing.

According to an embodiment, since the lubricant is extracted directly from the interior space 123 by the pump under its suction pressure, the lubrication system 200 of the present disclosure can extract lubricant from any region of the bearing housing 121, for example, location(s) where the lubricant tends to stay for a longer duration during circulation or operation.

Further, the pump 201 on its delivery or discharge side may be fluidically connected to an upper region 126, also referred to as "upper hemispherical region 126", to supply the extracted lubricant 300 back to the bearing 124.

In other embodiments, the delivery or discharge side of the pump 201 may be fluidically connected to the mid-section or slightly below the mid-section to supply the extracted lubricant 300 back to the interior space 123.

According to further embodiments, the pump 201 is connected via different provisions corresponding to the region 126 leading to the interior space 123. For example, the pump 201 is connected to the region 126 which includes the cast portion of the bearing housing 121 and/or a seal carrier.

In an embodiment, the lubricant extracted by the pump 201 out of the interior space 123 may be introduced back into the interior space 123 in at least one of tangential direction, axial direction, and radial direction relative to the direction of rotation of the shaft 105.

The bearing arrangement 120 comprises one inlet 128 or a plurality of inlets 128 to which the pump 201 is fluidically connected. For example, the inlet 128 is arranged in the bearing housing 121 and/or the bearing cover 122. The inlet 128 can also be arranged at the lower region 127 according to an embodiment. For example, the inlet 128 is formed by an opening. Alternatively, or in addition, an inlet valve or a metering device may be a part of the inlet 128, for example.

The pump 201 is configured to extract lubricant, in particular a portion of the lubricant 300, which is arranged in the interior space 123, from the interior space 123 and pump it to the inlet 128. Pump 201 may thus take part in recirculation of the lubricant that is already present in the bearing housing 121. Hence, apart from regular supply of fresh lubricant 302 via the lubrication supply 250, distribution of the existing lubricant 300 within the bearing housing 121 is possible.

Since the opening 129 and the inlet 128 are arranged in different, distinctive regions of the bearing housing 121, the pump 201 allows for a spreading and distribution of the lubricant 300 inside the interior space 123. This results in optimized lubrication of the bearing elements.

In an embodiment, the rate of extraction of the lubricant 300 out of the interior space 123 may be relatively higher than the rate of supply of fresh lubricant 302.

In an embodiment, the ratio of flow rate of extracted lubricant 300 to the flow rate of fresh lubricant 302 is high, for example, at least 30.

The lubricant 300 that is pumped out of a lower or bottom part of the interior space 123 is recirculated back on to the rolling elements 125. In particular, the extracted lubricant 300 is recirculated back to rolling elements 125 at the upper region 126, so that the recirculated lubricant is carried forward by the rotating rolling elements in a circumferential direction. Thus, the lubricant 300 can be distributed in the interior space 123 beneficially while the bearing 124 is operating.

Along a flow direction of the extracted lubricant 300 from the opening 129 to the inlet 128, a first filter 202 is arranged. The filter 202 is arranged on the suction side of the pump 201. The first filter 202 may be configured to filter out particles and is aimed at protecting the pump. For example, the first filter 202 may be fine enough to protect the pump 201 and coarse enough not to lead to cavitation or to minimize air inlet into the pump 201. In an embodiment, the first filter 202 is optional.

The suction pressure of the pump 201 may be influenced by presence of the first filter 202.

A conditioning arrangement 206 with a first sensor system 221 may be arranged downstream of the pump 201. The conditioning arrangement 206 may be alternately or additionally present upstream of the pump 201. As shown, the conditioning arrangement 206 is fluidly coupled to the discharge side of the pump 201. In an embodiment, the conditioning arrangement 206 may include a first sensor system 221 and/or an adjusting unit 220. The conditioning arrangement 206, therefore, can be realized as an integrated arrangement or as a discrete arrangement. For example, in case of a discrete arrangement, the conditioning arrangement 206 comprises an adjusting unit 220 that may interact with an externally located first sensor unit 221 or other measuring/detecting devices.

The conditioning arrangement 206 is configured to detect and monitor the condition of the extracted lubricant 300. In particular, the first sensor system 221 is configured to monitor the condition of the lubricant 300 that is supplied by the pump 201. For example, the first sensor system 221 comprises at least one of a temperature sensor, a particle sensor, a flowrate sensor, and a secondary fluid content sensor. For example, the secondary fluid is air or water. In particular, the secondary fluid is a fluid other than the lubricant, in particular other than grease or oil. The first sensor system 221 can comprise other or additional sensors which are configured to determine a condition of the lubricant 300,for example, a pressure at which the lubricant is discharged out of the pump 201, and so on.

The conditioning arrangement 206 further comprises an adjusting unit 220. The adjusting unit 220 may be discrete from the first sensor system 221 as shown in Figure 2. For example, the adjusting unit 220 may be a particle adjustment unit, for example, a catcher or a separator to separate unwanted particles present in the lubricant, while the first sensor system 221 may be a flow rate sensor. The particle adjustment unit and the flow rate sensor may have separate interfaces with a control unit 210, so that the control unit 210 may regulate the operation of the particle adjustment unit 220 in response to input signals received from the flow rate sensor.

According to further embodiments, the adjusting unit 220 is an integrated part of the conditioning arrangement 206 together with the first sensor system 221. For example, the first sensor system 221 may constitute a particle sensor which may be integral with a particle adjustment unit, for example, a catcher or a separator to separate unwanted particles present in the lubricant.

According to other embodiments, the adjusting unit 220 may have multiple modules, each module being either discrete or integral with respect to the first sensor system 221.

The adjusting unit 220 is configured to adjust the condition of the extracted lubricant 300, in particular dependent on the condition determined by the first sensor system 221. For example, if a temperature value of the lubricant outside a pre-set temperature range is determined by the first sensor system 221, the adjusting unit 220 is configured to adjust the temperature of the extracted lubricant 300. For example, the adjusting unit 222 is configured to heat or to cool the extracted lubricant 300 to bring its temperature within the specified temperature range.

Further, a second filter 203 is arranged downstream of the pump 201 and, for example, downstream of the conditioning arrangement 206, more particularly, downstream of the first sensor system 221. The second filter 203 is configured to filter particles out of the extracted lubricant 300 and thus increase the quality of the extracted lubricant 300 before it is supplied back to the interior space 123 via the inlets 128. The lubrication system 200 with the pump 201 and the second filter 203 thus can increase the overall cleanliness and quality of the lubricant 300 in the interior space 123 and the bearing 124.

The first filter 202 and/or the second filter 203 comprise at least one of a mesh, a magnetic particle catcher and any other element that is designed and configured to trap dirt particles out of the extracted lubricant 300. For example, the mesh size of the mesh depends on the kind of pump 201 and/or the kind of filter 202, 203..

In other embodiments, the filters may be accompanied by or substituted with catcher(s) or separator(s) for removing out contaminants, for example, solid dispersants or particles.

Referring back to the conditioning arrangement 206, a heater of the adjusting unit 220 is arranged upstream of the second filter 203 to enhance flow of the lubricant 300. The heat supplied by the heater may take part in getting rid of secondary fluids, for example, water content or other unwanted fluidic phases in the lubricant, and may also alter the viscosity of the lubricant to effectuate optimal flow. Alternatively, or in addition, a cooler of the adjusting unit 220 is arranged downstream of the second filter 203, for example. In an embodiment, the adjusting unit 220 may include a heat exchanging unit which may be configured to heat or cool the lubricant depending on the requirement.

As shown in Figure 2, a pressure measurement unit 204 is arranged to determine the pressure on the inlet side of the second filter 203 and/or a differential pressure between the input side and the output side of the second filter 203. For example, the pressure measurement unit 204 is used to detect a degree of clogging of the second filter 203, for example, a drop in pressure across the filter 203 due to clogged particles. Dependent on an output of the pressure measurement unit 204, the lubrication system 200 can be controlled in a suitable manner and/or service and maintenance requirements can be detected. For example, a requirement for cleaning the second filter 203 can be determined dependent on the output of the pressure measurement unit 204. Measurement of pressure by the pressure measurement unit 204 may also serve as a basis for pump 201 switch ON/OFF strategies.

A safety device 205, like a pressure relief valve, can be optionally arranged to protect the lubrication system 200, and in particular, the pump 201 and/or the second filter 203 and/or other elements of the lubrication system 200 against overpressure. For example, the safety device 205 comprises an opening pressure of about 200 bar. When the pressure in the lubrication system 200 exceeds beyond a safety threshold, the safety device 205 may relieve and compensate the excess pressure. For example, the safety device 205 may function as a bypass valve which, in response to excessive pressure, opens and redirects the flowing lubricant back to intake or suction side of the pump 201 via the bypass line 215, as shown.

In an embodiment, the lubrication system 200, may include an absolute pressure measuring unit 207, for example, a pressure gauge which determines and monitors the absolute pressure of the lubricant in the lubrication system 200.

The lubrication system 200 may include a second sensor system 222 that is optionally arranged to determine external conditions or properties of some of the components of the lubrication system 200 or the bearing arrangement 120 or the wind turbine 100 itself. For example, a temperature inside the nacelle 106 is determined and/or an air pressure inside the nacelle 106 is determined via the second sensor system 222. In such cases, the second sensor system 222 may be a part of the onboard sensor system of the wind turbine 100, or distinctly installed in addition to the onboard sensor system of the wind turbine. Alternatively, or in addition, the second sensor system 222 is configured to determine other parameters that are external to the lubricant 300 and can influence the functionality of the lubrication system 200. For instance, the second sensor system 222 may determine parameters including, but not limited to electrical current or power associated with the pump (operated by electric motor), temperature of the pump 201, vibrational characteristics of the pump 201, etc. Alternatively, or in addition, the second sensor system 222 may determine other parameters like load acting on the bearing elements, pressure of lubricant inside the bearing housing, speed of the rotating shaft, and so on.

A control unit 210 is provided to control the functionality and operation of the elements of the lubrication system 200, in particular the functionality and operation of the pump 201, the first filter 202, the second filter 203, the pressure measurement unit 204, the absolute pressure measurement unit 207, the safety device 205, the conditioning arrangement 206, the adjusting unit 220, the first sensor system 221, and/or the second sensor system 222 and one or more valves, e.g., valves at the inlet 128. The dashed lines indicate the flow of signals and/or commands from and to the control unit 210 from various elements described above.

In an embodiment, the control unit 210 is configured to output a warning signal to an operator, if operating parameters of one element or more elements of the lubrication system 200 reach a value outside a specific value range which is representative of a typical operation. Alternatively, or in addition, the control unit 210 is configured to interrupt the extraction of the lubricant 300, for example if the safety device 205 detects an overpressure and/or the pressure measurement unit 204 detects an overpressure and/or a clogged state of the second filter 203.

In an embodiment, the control unit 210 interrupts operation of the lubrication system 200, for example, by switching off the pump 201, when one or more of the external conditions as detected by the second sensor system 222 goes beyond safe or threshold limits. For example, when vibration of the pump 201 as detected by a vibration sensor constituting the second sensor system 222 goes beyond a threshold limit. Similarly, if the second sensor system 222 detects entry of air into the pump 201, the control unit 210 may immediately switch off the pump 201 to prevent damages.

In an embodiment, the control unit 210 may regulate certain operating characteristics of the lubrication system 200. For example, the pump 201 speed or output may be varied based on determination of certain external conditions. Examples include regulation of speed (or displacement) of the pump based on an input signal corresponding to, for example, load on the bearing elements or speed of the rotating shaft 105 as detected by the second sensor system 222. This results in regulation and optimization of the flow of the lubricant back into the interior space via the inlet 128.

The lubrication system 200 contributes to distribute the lubricant 300 as desired in the bearing 124. In addition to supplying fresh lubricant 302 with the lubricant supply 250, the lubrication system 200 is configured to increase or tune the quality of the used lubricant 300, for example using the first filter 202 and/or the second filter 203 and/or the adjusting unit 220. Alternatively, or in addition, a monitoring of the condition of the lubricant 300 is possible, in particular by using the conditioning arrangement 206 with the first sensor system 221. Furthermore, the lubricant 300 condition monitoring may be possible on the basis of measurements made by the second sensor system 222, for example, the pressure or temperature inside the bearing housing.

The pump 201 is connected fluidically directly to the interior space 123 via the opening 129. The opening 129 is in particular not connected to a further tank from which a pump sucks lubricant. The suction side of the pump 201 according to the disclosure sucks the lubricant directly from the interior space 123, in particular from the lower region 127 of the bearing housing. An additional, separate lubricant tank for receiving the used lubricant can thus be avoided. The bearing housing itself and in particular the interior space 123 is used as a lubricant reservoir. The lubricant 300 collects in the lower region 127 of the interior space 123. For example, an amount of at least 10 litres of lubricant collects in the lower region 127. In particular, the opening 129 is arranged vertically below relative to the specified lubricant level 301.

The extracted lubricant 300 is supplied back to the bearing 124 and in particular to the rolling elements 125 via the inlets 128, which in particular are provided in addition to the further inlet 103 through which fresh lubricant 302 can be supplied.

For example, the pump 201 is driven by an electric motor, in particular a servomotor that can be communicatively coupled with the control unit 210. Alternatively, the pump is coupled with the drive train and driven by a movement of the shaft 105. In this embodiment, no additional electric motor is necessary.

According to further embodiments, the order of the elements 201, 202, 203, 204, 205, 206, 210, 220, 221, 222 is different to that shown in Figure 2.

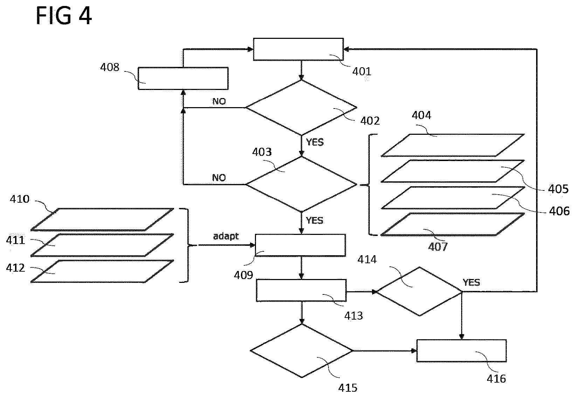

Figure 4 illustrates a flowchart that outlines a method for lubricating the bearing arrangement 120 according to an embodiment. For example, the method is used to operate a lubrication system 200. For example, the lubrication system 200 is operated in accordance with the method.

In a first step 401, the lubrication sequence is paused. The wind turbine 100 operates but no lubricant 300 is extracted and supplied via the lubrication system 200. For example, a specified time interval for extracting the lubricant 300 out of the interior space 123 has not yet expired.

In a step 402, it is determined whether a predefined pause interval has expired. If the pause interval has not expired, the method continues with step 408 and sets an additional pause timer.

If the pause interval has expired, the method continues with a step 403. In step 403, it is determined whether given operating conditions (which may include conditions of the lubricant itself or external conditions) for the lubrication system 200 and a lubrication scheme are met. For example, in a step 404, it is determined whether the lubricant temperature is over a given threshold. Alternatively or in addition, in a step 405, it is determined whether a pump temperature is below a given threshold. Alternatively, or in addition, in a step 406 a movement of the drivetrain, in particular the movement of the bearing is determined. Alternatively, or in addition, in a step 407, it is determined whether pressure of the lubricant 300 is below a given threshold.

If the pre-set operating conditions are met, the method continues with a step 409. If one or more of the pre-set operating conditions corresponding to steps 404-407 are not met, the method proceeds towards step 408 via step 403 where an additional pause timer may be set.

In the step 409, the length of the interval during which lubricant 300 is extracted from and supplied back to the interior space 123 is set. For example, the interval is set dependent on external and/or internal conditions. For example, the interval is set dependent on a lubricant temperature which is determined in a step 410. Alternatively, or in addition, the interval is set dependent on a bearing temperature which is determined in a step 411. Alternatively, or in addition, the interval is set dependent on a critical load condition of the bearing 124 which is determined in a step 412.

In a step 413, the lubrication system 200 is operated and in particular the pump 201 sucks a portion of the lubricant out of the interior space 123 and supplies it back to the interior space 123. During operation, the control unit 210, for example, monitors the quality of the extracted lubricant 300 via the first and/or second sensor systems 221, 222. In a step 414, it is determined whether air is in the lubricant 300. If air is detected, the method pauses in step 401. Alternatively or in addition, a warning signal and/or warning information is output by the control unit 210.

In a step 415, the amount of particles in the extracted lubricant 300 is determined. If more particles are detected than a specified threshold value, this is for example indicative of damage or of a poor condition of the bearing 124. If the amount of particles exceeds the given threshold, the method continues with step 416 i.e., providing a warning signal.

Alternatively or in addition to the detection of the amount of particles, a characteristic of the particles is determined in step 415. For example, the size of the particles is a parameter indicative of the condition of the bearing 124.

According to the method, the lubrication system 200 works for example if a minimum temperature of the lubricant 300 is reached for sufficient flowability of the lubricant 300. The temperature of the bearing 124 and/or the temperature of the bearing housing 121 can also be considered to detect a sufficient flowability of the lubricant 300. The lubrication system 200 is, for example, switched off at a critical pump temperature to protect the lubrication system 200.

The lubrication system 200, for example, starts working and/or the lubrication interval is adapted dependent on operating conditions of the wind turbine 100. For example, at known critical operating conditions, additional lubrication is needed and thus the pump intervals are increased. A continuous monitoring of differential pressure over the second filter 203 is possible. Thus, a failure of the bearing 124 can be detected dependent on unusual gradients in pressure troughs.

In step 414, air is for example detected dependent on a fluctuating pressureon the suction side of the pump 201. For example, the safety device 205 can be actively controlled dependent on a pressure drop over the first filter 202 and/or the second filter 203 or a detected absolute pressure in the lubrication system 200, in particular on an outlet side of the pump 201. If the pressure is too high, the safety device 205 opens a bypass to suction side of the pump 201 or an additional reservoir (not explicitly shown).

The lubrications system 200 enables to determine quality/characteristics of the lubricant 300 coming out of the bearing housing 121 qualitatively and/or quantitatively. A real-time indication of lubricant quality is possible, which is beneficial to estimate health and possible damage to rolling elements 125. For example, premature failure of rolling elements 125 and/or the bearing 124 can be avoided.

It is possible to adjust the share between used lubricant 300 and fresh lubricant 302. If the detected contaminant level exceeds a given threshold, fresh grease 302 can be supplied entirely after removing used lubricant 300 from the bearing housing 121.

For example, a pressure-based monitoring and control of the flow of the lubricant 300 into the housing is possible. This pressure monitoring allows an adjustment in pump operation and also serves to shut-down the pump 201 if pressures are out of safe limits. Optimal pressure of the lubricant 300 ensures safety of seals, and also enhances lubrication of rolling elements 125.

The adjusting unit 220 controls the temperature of the recirculated or used lubricant 300 to keep the temperature as optimal as possible for lubrication. Lubrication is improved and the life of bearing elements is extended.

The lubrication system 200 and the corresponding method help to guarantee a certain level of lubricant quality inside the bearing housing 121 by the filters 202, 203 and the condition monitoring. The lubricant 300 can be used efficiently and thus the needed annual amount of fresh lubricant 302 can be reduced. This helps to save costs. Indicators for necessary service and maintenance on the bearing 124 and the lubrication of the bearing 124 are possible. The lifetime of the bearing 124 can be extended and maintenance efforts can be reduced due to the distribution of the lubricant 300 and/or the improvement of the lubricant quality.

### References

- 100: wind turbine
- 102: tower
- 104: foundation
- 105: shaft
- 106: nacelle
- 108: rotor
- 110: rotor blade
- 112: rotor hub

- 120: bearing arrangement
- 121: bearing housing
- 122: bearing cover
- 123: interior space
- 124: bearing
- 125: rolling element
- 126: upper region
- 127: lower region
- 128: inlet
- 129: opening
- 130: further inlet

- 150: bearing system

- 200: lubrication system
- 201: extracting device
- 202: first filter
- 203: second filter
- 204: pressure measurement unit
- 205: safety device
- 206: conditioning arrangement
- 207: absolute pressure measuring unit
- 210: control unit
- 215: bypass line

- 220: adjusting unit
- 221: first sensor system
- 222: second sensor system

- 250: lubricant supply
- 251: supply pump
- 252: tank

- 300: lubricant
- 301: lubricant level
- 302: fresh lubricant

- 401 - 416: method steps

## Claims

1. A lubrication system (200) for a bearing arrangement (120) of a wind turbine (100), in particular a rotor bearing arrangement of a wind turbine (100), the bearing arrangement (120) comprising an interior space (123), the lubrication system (200) comprising a device (201) for extracting at least a portion of a lubricant (300) out of the interior space (123) and for supplying the extracted lubricant (300) to at least one region (126) of the interior space (123), **characterised in that** the lubrication system (200) comprises a sensor system (222) configured to determine an external condition associated with at least one of the lubrication system (200) and the bearing arrangement (120).

2. Lubrication system (200) according to claim 1, comprising a filter (202, 203), wherein the filter (202, 203) is configured to filter the extracted lubricant (300).

3. Lubrication system (200) according to one of the preceding claims, comprising a pressure measurement unit (204), wherein the pressure measurement unit (204) is configured to determine a pressure of the extracted lubricant (300).

4. Lubrication system (200) according to one of the preceding claims, comprising a safety device (205), wherein the safety device (205) is configured to mitigate overpressure in the lubrication system (200).

5. Lubrication system (200) according to one of the preceding claims, comprising a conditioning arrangement (206), wherein the conditioning arrangement (206) is configured to determine and/or adjust a condition of the extracted lubricant (300).

6. Lubrication system (200) according to claim 5, wherein the conditioning arrangement (206) comprises at least one of:
- a further sensor system (221) configured to determine the condition of the extracted lubricant (300); and
- an adjusting unit (220) configured to adjust the condition of the extracted lubricant (300);
wherein the condition comprises at least one of a particle distribution in the extracted lubricant (300), a temperature of the extracted lubricant (300), a flow rate of the extracted lubricant (300), and a secondary fluid content in the extracted lubricant (300).

7. Lubrication system (200) according to one of the preceding claims, comprising a control unit (210), wherein the control unit (210) is configured to control the device (201) and/or further elements (128, 202, 203, 204, 205, 220, 221, 222) of the lubrication system (200).

8. Bearing system (150) for a wind turbine (100), comprising
- a bearing arrangement (120),
- a lubrication system (200) according to one of the preceding claims, wherein the lubrication system (200) is fluidically coupled with the interior space (123) of the bearing arrangement (120).

9. Bearing system (150) according to claim 8, wherein the bearing arrangement (120) comprises a bearing housing (121) which houses the interior space (123), the bearing housing (121) further comprising at least one lubricant inlet (128) in the at least one region (126) for supplying the extracted lubricant (300) into the interior space (123).

10. Bearing system (150) according to claim 8 or claim 9, wherein the bearing arrangement (120) comprises an opening (129) in a lower region (127) of the interior space (123), wherein the device (201) is fluidically connected to the opening (129) for extracting the lubricant (300) out of the interior space (123).

11. Method for lubricating a bearing arrangement (120) of a wind turbine (100) using a system according to any one of the preceding claims, the method comprising:
- extracting at least a portion of a lubricant (300) out of an interior space (123) of the bearing arrangement (120), and
- supplying the extracted lubricant (300) to at least one region (126) of the interior space (123).

12. Method according to claim 11, comprising:
- determining a value of a preset operating condition,
- extracting the lubricant (300) out of the interior space (123) if the value of the preset operating condition is within a specified range, and
- continuously monitoring a condition of the extracted lubricant (300).

13. Method according to claim 11 or 12, comprising:
- determining a value of an external condition associated with at least one of the lubrication system (200) and the bearing arrangement (120),
- extracting the lubricant (300) out of the interior space (123) at specified time intervals, wherein a length of the time intervals depends on the determined value of the external condition.

14. Method according to one of claims 11 to 13, comprising:
- determining a condition of the extracted lubricant (300),
- outputting a warning signal and/or interrupt the extraction of at least the portion of the lubricant (300) out of the interior space (123) if at least one of the following is determined:
• a value corresponding to the determined condition deviates from a threshold value, and
• a malfunction associated with a lubrication system (200) of the bearing arrangement (120).

15. A wind turbine comprising a bearing system (150) according to any one of the claims 8 to 10.

## Patentansprüche

1. Schmiersystem (200) für eine Lageranordnung (120) einer Windenergieanlage (100), insbesondere eine Rotorlageranordnung einer Windenergieanlage (100), wobei die Lageranordnung (120) einen Innenraum (123) umfasst, wobei das Schmiersystem (200) eine Vorrichtung (201) zum Entnehmen zumindest eines Teils eines Schmierstoffs (300) aus dem Innenraum (123) und zum Zuführen des entnommenen Schmierstoffs (300) zu mindestens einem Bereich (126) des Innenraums (123) umfasst, **dadurch gekennzeichnet, dass** das Schmiersystem (200) ein Sensorsystem (222) umfasst, das dazu eingerichtet ist, einen äußeren Zustand zu bestimmen, der mit mindestens einem des Schmiersystems (200) und der Lageranordnung (120) in Zusammenhang steht.

2. Schmiersystem (200) nach Anspruch 1, umfassend einen Filter (202, 203), wobei der Filter (202, 203) dazu eingerichtet ist, den entnommenen Schmierstoff (300) zu filtern.

3. Schmiersystem (200) nach einem der vorhergehenden Ansprüche, umfassend eine Druckmesseinheit (204), wobei die Druckmesseinheit (204) dazu eingerichtet ist, einen Druck des entnommenen Schmierstoffs (300) zu bestimmen.

4. Schmiersystem (200) nach einem der vorhergehenden Ansprüche, umfassend eine Sicherheitseinrichtung (205), wobei die Sicherheitseinrichtung (205) dazu eingerichtet ist, einen Überdruck im Schmiersystem (200) zu mindern.

5. Schmiersystem (200) nach einem der vorhergehenden Ansprüche, umfassend eine Konditionierungseinrichtung (206), wobei die Konditionierungseinrichtung (206) dazu eingerichtet ist, einen Zustand des entnommenen Schmierstoffs (300) zu bestimmen und/oder einzustellen.

6. Schmiersystem (200) nach Anspruch 5, wobei die Konditionierungseinrichtung (206) mindestens eines der folgenden Elemente umfasst:
- ein weiteres Sensorsystem (221), das dazu eingerichtet ist, den Zustand des entnommenen Schmierstoffs (300) zu bestimmen; und
- eine Einstelleinheit (220), die dazu eingerichtet ist, den Zustand des entnommenen Schmierstoffs (300) einzustellen;
wobei der Zustand mindestens eines der folgenden Merkmale umfasst:
eine Partikelverteilung im entnommenen Schmierstoff (300),
eine Temperatur des entnommenen Schmierstoffs (300),
eine Durchflussrate des entnommenen Schmierstoffs (300) und einen Gehalt an Sekundärfluiden im entnommenen Schmierstoff (300).

7. Schmiersystem (200) nach einem der vorhergehenden Ansprüche, umfassend eine Steuereinheit (210), wobei die Steuereinheit (210) dazu eingerichtet ist, die Vorrichtung (201) und/oder weitere Elemente (128, 202, 203, 204, 205, 220, 221, 222) des Schmiersystems (200) zu steuern.

8. Lagersystem (150) für eine Windenergieanlage (100), umfassend
- eine Lageranordnung (120),
- ein Schmiersystem (200) nach einem der vorhergehenden Ansprüche,
wobei das Schmiersystem (200) fluidisch mit dem Innenraum (123) der Lageranordnung (120) gekoppelt ist.

9. Lagersystem (150) nach Anspruch 8, wobei die Lageranordnung (120) ein Lagergehäuse (121) umfasst, das den Innenraum (123) aufnimmt, wobei das Lagergehäuse (121) ferner mindestens einen Schmierstoffeinlass (128) in dem mindestens einen Bereich (126) zum Zuführen des entnommenen Schmierstoffs (300) in den Innenraum (123) umfasst.

10. Lagersystem (150) nach Anspruch 8 oder 9, wobei die Lageranordnung (120) eine Öffnung (129) in einem unteren Bereich (127) des Innenraums (123) umfasst, wobei die Vorrichtung (201) fluidisch mit der Öffnung (129) verbunden ist, um den Schmierstoff (300) aus dem Innenraum (123) zu entnehmen.

11. Verfahren zum Schmieren einer Lageranordnung (120) einer Windenergieanlage (100) unter Verwendung eines Systems nach einem der vorhergehenden Ansprüche, wobei das Verfahren Folgendes umfasst:
- Entnehmen zumindest eines Teils eines Schmierstoffs (300) aus einem Innenraum (123) der Lageranordnung (120), und
- Zuführen des entnommenen Schmierstoffs (300) zu mindestens einem Bereich (126) des Innenraums (123).

12. Verfahren nach Anspruch 11, umfassend:
- Bestimmen eines Werts einer vorgegebenen Betriebsbedingung,
- Entnehmen des Schmierstoffs (300) aus dem Innenraum (123), wenn der Wert der vorgegebenen Betriebsbedingung innerhalb eines festgelegten Bereichs liegt, und
- kontinuierliches Überwachen eines Zustands des entnommenen Schmierstoffs (300).

13. Verfahren nach Anspruch 11 oder 12, umfassend:
- Bestimmen eines Werts eines äußeren Zustands, der mit mindestens einem des Schmiersystems (200) und der Lageranordnung (120) verbunden ist,
- Entnehmen des Schmierstoffs (300) aus dem Innenraum (123) in vorgegebenen Zeitintervallen, wobei die Länge der Zeitintervalle vom bestimmten Wert des äußeren Zustands abhängt.

14. Verfahren nach einem der Ansprüche 11 bis 13, umfassend:
- Bestimmen eines Zustands des entnommenen Schmierstoffs (300),
- Ausgeben eines Warnsignals und/oder Unterbrechen der Entnahme zumindest eines Teils des Schmierstoffs (300) aus dem Innenraum (123), wenn mindestens eine der folgenden Bedingungen festgestellt wird:
- ein dem bestimmten Zustand entsprechender Wert weicht von einem Schwellenwert ab, und/oder
- eine Fehlfunktion, die mit einem Schmiersystem (200) der Lageranordnung (120) verbunden ist.

15. Windenergieanlage, umfassend ein Lagersystem (150) nach einem der Ansprüche 8 bis 10.

## Revendications

1. Système de lubrification (200) pour un ensemble de paliers (120) d'une éolienne (100), en particulier un ensemble de paliers de rotor d'une éolienne (100), l'ensemble de paliers (120) comprenant un espace intérieur (123), le système de lubrification (200) comprenant un dispositif (201) destiné à extraire au moins une partie d'un lubrifiant (300) de l'espace intérieur (123) et à acheminer le lubrifiant extrait (300) vers au moins une région (126) de l'espace intérieur (123), **caractérisé en ce que** le système de lubrification (200) comprend un système de capteurs (222) configuré pour déterminer une condition externe associée à au moins l'un parmi le système de lubrification (200) et l'ensemble de paliers (120).

2. Système de lubrification (200) selon la revendication 1, comprenant un filtre (202, 203), le filtre (202, 203) étant configuré pour filtrer le lubrifiant extrait (300).

3. Système de lubrification (200) selon l'une quelconque des revendications précédentes, comprenant une unité de mesure de pression (204), l'unité de mesure de pression (204) étant configurée pour déterminer une pression du lubrifiant extrait (300).

4. Système de lubrification (200) selon l'une quelconque des revendications précédentes, comprenant un dispositif de sécurité (205), le dispositif de sécurité (205) étant configuré pour atténuer une surpression dans le système de lubrification (200).

5. Système de lubrification (200) selon l'une quelconque des revendications précédentes, comprenant un dispositif de conditionnement (206), le dispositif de conditionnement (206) étant configuré pour déterminer et/ou ajuster un état du lubrifiant extrait (300).

6. Système de lubrification (200) selon la revendication 5, dans lequel le dispositif de conditionnement (206) comprend au moins l'un des éléments suivants :
- un système de capteurs supplémentaire (221) configuré pour déterminer l'état du lubrifiant extrait (300) ; et
- une unité d'ajustement (220) configurée pour ajuster l'état du lubrifiant extrait (300) ;
l'état comprenant au moins l'un des éléments suivants :
une distribution de particules dans le lubrifiant extrait (300),
une température du lubrifiant extrait (300),
un débit du lubrifiant extrait (300), et
une teneur en fluide secondaire dans le lubrifiant extrait (300).

7. Système de lubrification (200) selon l'une quelconque des revendications précédentes, comprenant une unité de commande (210), l'unité de commande (210) étant configurée pour commander le dispositif (201) et/ou d'autres éléments (128, 202, 203, 204, 205, 220, 221, 222) du système de lubrification (200).

8. Système de paliers (150) pour une éolienne (100), comprenant :
- un ensemble de paliers (120),
- un système de lubrification (200) selon l'une quelconque des revendications précédentes,
le système de lubrification (200) étant couplé fluidiquement à l'espace intérieur (123) de l'ensemble de paliers (120).

9. Système de paliers (150) selon la revendication 8, dans lequel l'ensemble de paliers (120) comprend un boîtier de palier (121) renfermant l'espace intérieur (123), le boîtier de palier (121) comprenant en outre au moins une entrée de lubrifiant (128) dans ladite au moins une région (126) pour acheminer le lubrifiant extrait (300) dans l'espace intérieur (123).

10. Système de paliers (150) selon la revendication 8 ou 9, dans lequel l'ensemble de paliers (120) comprend une ouverture (129) dans une région inférieure (127) de l'espace intérieur (123), le dispositif (201) étant raccordé fluidiquement à l'ouverture (129) pour extraire le lubrifiant (300) de l'espace intérieur (123).

11. Procédé de lubrification d'un ensemble de paliers (120) d'une éolienne (100) au moyen d'un système selon l'une quelconque des revendications précédentes, le procédé comprenant :
- l'extraction d'au moins une partie d'un lubrifiant (300) de l'espace intérieur (123) de l'ensemble de paliers (120), et
- l'acheminement du lubrifiant extrait (300) vers au moins une région (126) de l'espace intérieur (123).

12. Procédé selon la revendication 11, comprenant :
- la détermination d'une valeur d'une condition de fonctionnement prédéfinie,
- l'extraction du lubrifiant (300) de l'espace intérieur (123) lorsque la valeur de la condition de fonctionnement prédéfinie se situe dans une plage spécifiée, et
- la surveillance continue d'un état du lubrifiant extrait (300).

13. Procédé selon la revendication 11 ou 12, comprenant :
- la détermination d'une valeur d'une condition externe associée à au moins l'un parmi le système de lubrification (200) et l'ensemble de paliers (120),
- l'extraction du lubrifiant (300) de l'espace intérieur (123) à des intervalles de temps spécifiés, la durée des intervalles dépendant de la valeur déterminée de la condition externe.

14. Procédé selon l'une quelconque des revendications 11 à 13, comprenant :
- la détermination d'un état du lubrifiant extrait (300),
- l'émission d'un signal d'avertissement et/ou l'interruption de l'extraction d'au moins une partie du lubrifiant (300) de l'espace intérieur (123) lorsqu'au moins l'un des éléments suivants est constaté :
- une valeur correspondant à l'état déterminé s'écarte d'une valeur seuil ; et/ou
- un dysfonctionnement associé à un système de lubrification (200) de l'ensemble de paliers (120).

15. Éolienne comprenant un système de paliers (150) selon l'une quelconque des revendications 8 à 10.
